# EUROPEAN PATENT APPLICATION

(11) **EP 4 775 848 A1**
(43) Date of publication of application: **15.07.2026**
(21) Application number: 25217428.9
(22) Date of filing: 20.11.2025
(51) Int. Cl.: F16H 1/46

(54) **PLANETARY GEARBOX**

(30) Priority: 14.01.2025 CN 202510054049
(71) Applicant: Nanjing High-Speed Gear Manufacturing Co., Ltd., Nanjing, Jiangsu 211100 (CN)
(72) Inventor: SUN, Zhongkui, NANJING, 211100 (CN); HU, Jichun, NANJING, 211100 (CN); ZHOU, Xingjun, NANJING, 211100 (CN); MIAO, Hongliang, NANJING, 211100 (CN); GUO, Huajie, NANJING, 211100 (CN); CAO, Hong, NANJING, 211100 (CN)
(74) Representative: Cabinet Beaumont

(57) **Abstract**

Disclosed is a planetary gearbox, including a first planet carrier (1), a second planet carrier (2) and a support bearing (3), the first planet carrier (1), the support bearing (3) and the second planet carrier (2) are sequentially arranged in a gearbox body (200) in the axial direction of a main shaft (100), and the first planet carrier (1) is rotatably fit with the second planet carrier (1) through the support bearing (3). The first planet carrier (1) and the second planet carrier (2) of the planetary gearbox (200) are directly rotatably fit with each other through the support bearing (3), and no abutting structure needs to be arranged on the gearbox body (200) to be connected to the support bearing (3).

## Description

### TECHNICAL FIELD

The present disclosure relates to the field of wind power gearboxes and, in particular, to a planetary gearbox.

### BACKGROUND

Currently, in a planetary gearbox commonly used in a wind turbine, the planetary carriers at various stages are supported by a gearbox body, that is, the planetary carriers are rotatably fit with the gearbox body through a bearing. Due to the limitation on the support function of the gearbox body to support the planetary carriers at various stages, the gearbox body requires a special abutting structure and an extended axial length to ensure the mounting stability of the planetary carriers. However, such a gearbox body with a complex structure and a large size increases the overall weight of the gearbox, thereby making it inconvenient to hoist and mount the gearbox as a whole.

Therefore, a gearbox is urgently needed to solve the above problems in the related art.

### SUMMARY

The present disclosure provides a planetary gearbox to shorten the axial length of the gearbox body, thereby reducing the weight and lowering the manufacturing cost.

The present disclosure provides a planetary gearbox. The planetary gearbox includes a first planet carrier, a second planet carrier and a support bearing. The first planet carrier, the support bearing and the second planet carrier are sequentially arranged in a gearbox body in an axial direction of a main shaft, and the first planet carrier is rotatably fit with the second planet carrier through the support bearing.

Optionally, the support bearing is arranged between the first planet carrier and the second planet carrier, an outer race of the support bearing is in interference fit with the first planet carrier, and an inner race of the support bearing is in interference fit with the second planet carrier.

Optionally, the second planet carrier includes a gear web for supporting a planet gear and a bearing table arranged on the gear web, and the inner race of the support bearing is in interference connection with the bearing table.

Optionally, an abutting groove is arranged on the first planet carrier around an outer side of the bearing table, and the outer race of the support bearing is engaged in the abutting groove.

Optionally, the abutting groove is provided with a first abutting surface and a second abutting surface, the first abutting surface abuts against the outer race of the support bearing in a radial direction of the main shaft, and the second abutting surface abuts against the outer race of the support bearing in the axial direction of the main shaft.

Optionally, the bearing table is provided with a mounting surface and a docking surface, the mounting surface abuts against the inner race of the support bearing in the radial direction of the main shaft, and the docking surface abuts against the inner race of the support bearing in the axial direction of the main shaft.

Optionally, a weight reduction groove is arranged between the bearing table and the gear web.

Optionally, the thickness of the bearing table increases gradually in a direction toward the gear web.

Optionally, the bearing table is annularly arranged on the gear web.

Optionally, the support bearing is a conical bearing.

The planetary gearbox provided by the present disclosure includes a first planet carrier, a support bearing and a second planet carrier. Since the first planet carrier, the support bearing and the second planet carrier are sequentially arranged in the axial direction of the main shaft and the first planet carrier is rotatably fit with the second planet carrier through the support bearing, the planetary gearbox can achieve the normal multi-stage planetary transmission function through the first planet carrier and the second planet carrier. The first planet carrier and the second planet carrier of the planetary gearbox are directly rotatably fit with each other through the support bearing, and no abutting structure needs to be arranged on the gearbox body to be connected to the support bearing. Therefore, the structure of the gearbox body is simplified, the axial space occupied when the multiple stages of planet carriers are arranged is also reduced, and the axial length of the gearbox body is shortened, thereby reducing the overall weight of the planetary gearbox and lowering the manufacturing cost of the planetary gearbox.

### BRIEF DESCRIPTION OF DRAWINGS

FIG. 1 is a partial section view of a planetary gearbox according to an embodiment of the present disclosure; and
FIG. 2 is an enlarged view of part A of FIG. 1.

In the drawings:
100-main shaft;
200-gearbox body;
1-first planet carrier; 11-first abutting surface; 12-second abutting surface;
2-second planet carrier; 21-gear web; 22-bearing table; 221-mounting surface; 222-docking surface;
3-support bearing;
4-weight reduction groove.

### DETAILED DESCRIPTION

The present disclosure is described below in detail in conjunction with drawings and embodiments. It is to be understood that the embodiments described here are intended to explain the present disclosure and not to limit the present disclosure. Additionally, it is to be noted that for ease of description, only part, not all, of the structures related to the present disclosure are illustrated in the drawings.

In the description of the present disclosure, the terms "joined", "connected", and "secured" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, specific meanings of the preceding terms in the present disclosure may be understood based on specific situations.

In the present disclosure, unless otherwise expressly specified and limited, when a first feature is described as "above" or "below" a second feature, the first feature and the second feature may be in direct contact, or the first feature and the second feature may be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of the embodiments here, orientations or position relations indicated by terms such as "above", "below", "right", and "left" are based on the drawings. These orientations or position relations are intended only to facilitate the description and simplify an operation and not to indicate or imply that a device or element referred to must have such particular orientations or must be configured or operated in such particular orientations. Thus, these orientations or position relations are not to be construed as limiting the present disclosure. In addition, the terms "first" and "second" are used only for distinguishing descriptions and have no special meanings.

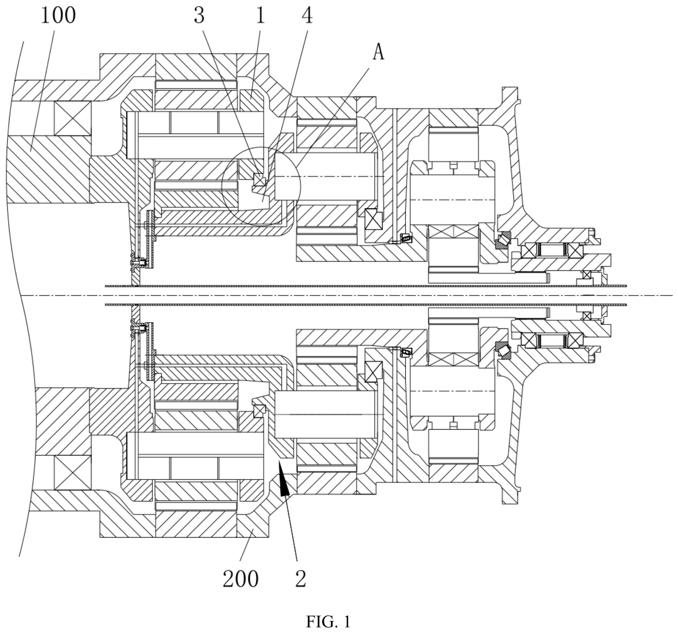

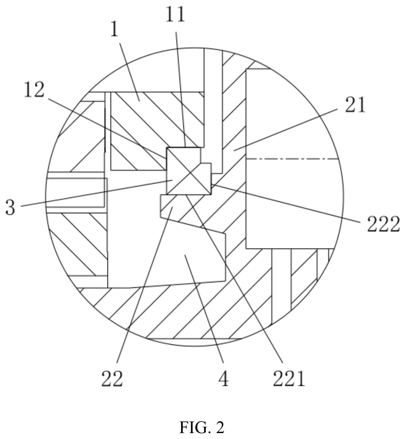

As shown in FIGS. 1 and 2, the present disclosure provides a planetary gearbox. The planetary gearbox includes a first planet carrier 1, a second planet carrier 2 and a support bearing 3. The first planet carrier 1, the support bearing 3 and the second planet carrier 2 are sequentially arranged in a gearbox body 200 in an axial direction of a main shaft 100, and the first planet carrier 1 is rotatably fit with the second planet carrier 2 through the support bearing 3.

Since the first planet carrier 1, the support bearing 3 and the second planet carrier 2 are sequentially arranged in the axial direction of the main shaft 100 and the first planet carrier 1 is rotatably fit with the second planet carrier 2 through the support bearing 3, the planetary gearbox can achieve the normal multi-stage planetary transmission function through the first planet carrier 1 and the second planet carrier 2. The first planet carrier 1 and the second planet carrier 2 of the planetary gearbox are directly rotatably fit with each other through the support bearing 3, and no supporting structure needs to be arranged on the gearbox body 200 to support the support bearing 3. Therefore, the structure of the gearbox body 200 is simplified, the axial space of the multiple stages of planet carriers is also reduced, and the axial length of the gearbox body 200 is shortened, thereby reducing the overall weight of the planetary gearbox and lowering the manufacturing cost of the planetary gearbox.

Specifically, as shown in FIGS. 1 and 2, the support bearing 3 is arranged between the first planet carrier 1 and the second planet carrier 2, an outer race of the support bearing 3 is in interference fit with the first planet carrier 1, and an inner race of the support bearing 3 is in interference fit with the second planet carrier 2, thereby ensuring the connection reliability between the support bearing 3 and the first planet carrier 1 and the connection reliability between the support bearing 3 and the second planet carrier 2 and avoiding the slipping between the first planet carrier 1 and the outer race of the support bearing 3 and the slipping between the second planet carrier 2 and the inner race of the support bearing 3. In another embodiment, the inner race of the support bearing 3 and the second planet carrier 2 are integrally formed, the outer race of the support bearing 3 and the first planet carrier 1 are integrally formed, and after the first planet carrier 1 and the second planet carrier 2 are assembled, a rolling element is filled between the inner race and the outer race to form the support bearing 3, thereby achieving the normal rotatably fit between the first planet carrier 1 and the second planet carrier 2.

Further, as shown in FIG. 1, to ensure the normal rotation of the planet gear on the first planet carrier 1 and the normal lubrication of the support bearing 3, the first planet carrier 1 is spaced a certain distance from the second planet carrier 2 in the axial direction so that the lubricating oil can partially smoothly flow into the support bearing 3 in the radial direction through the planet gear of the first planet carrier 1, thereby achieving the lubrication of the support bearing 3.

In the embodiments here, the planet gears on the first planet carrier 1 and the second planet carrier 2 are meshed with the ring gears of the gearbox body 200, and when the first planet carrier 1 and the second planet carrier 2 are driven to rotate by the main shaft 100, the first planet carrier 1 and the second planet carrier 2 are rotatably fit with the gearbox body 200, respectively.

As shown in FIG. 2, the second planet carrier 2 includes a gear web 21 for supporting a planet gear, and a bearing table 22 arranged on the gear web 21. The inner race of the support bearing 3 is in interference connection with the bearing table 22, the bearing table 22 protrudes from the gear web 21 in the axial direction of the main shaft 100, and the bearing table 22 is used for mounting the support bearing 3 so that the support bearing 3 and the second planet carrier 2 can be effectively mounted and fit with each other.

To facilitate the rapid positioning and mounting of the support bearing 3 and to improve the stability of the support bearing 3 in operation, as shown in FIG. 2, the first planet carrier 1 is provided with an abutting groove, the abutting groove is arranged around the outer side of the bearing table 22, and the outer race of the support bearing 3 is engaged in the abutting groove. It is to be understood that the abutting groove is annularly arranged on the first planet carrier 1, directly opposite to the bearing table 22.

The support bearing 3 is a conical bearing. Such an arrangement aims to improve the load-bearing capacity of the planetary gearbox and can also achieve the load transmission in the axial direction of the main shaft 100 while the first planet carrier 1 and the second planet carrier 2 are rotatably fit with each other.

Specifically, as shown in FIG. 2, the abutting groove is provided with a first abutting surface 11 and a second abutting surface 12, the first abutting surface 11 abuts against the outer race of the support bearing 3 in the radial direction of the main shaft 100, and the second abutting surface 12 abuts against the outer race of the support bearing 3 in the axial direction of the main shaft 100. In the embodiments here, the abutting groove is an L-shaped groove, the first abutting surface 11 and the second abutting surface 12 are perpendicular to each other, and the first abutting surface 11 and the second abutting surface 12 extend in a circumferential direction of the main shaft 100, respectively. When the outer race of the support bearing 3 is placed into the abutting groove, the outer circumferential surface and the end surface of the outer race may be abutted against the first abutting surface 11 and the second abutting surface 12, respectively, thereby achieving the rapid positioning and mounting of the support bearing 3. Meanwhile, the outer race of the support bearing 3 may abut against the second abutting surface 12 in the axial direction so that the first planet carrier 1 and the second planet carrier 2 can be prevented from moving in the axial direction, thereby achieving the effective load transmission in the axial direction of the main shaft 100.

Further, as shown in FIG. 2, the bearing table 22 is provided with a mounting surface 221 and a docking surface 222, the mounting surface 221 abuts against the inner race of the support bearing 3 in the radial direction of the main shaft 100, and the docking surface 222 abuts against the inner race of the support bearing 3 in the axial direction of the main shaft 100. Specifically, the mounting surface 221 and the docking surface 222 are perpendicular to each other, and the mounting surface 221 and the docking surface 222 extend in the circumferential direction of the main shaft 100, respectively. When the inner race of the support bearing 3 is mounted onto the bearing table 22, the inner circumferential surface and the end surface of the inner race may be abutted against the mounting surface 221 and the docking surface 222, respectively, thereby achieving the rapid mounting of the support bearing 3. Meanwhile, the abutting groove is fit with the bearing table 22, thereby achieving the effective load transmission in the axial direction of the main shaft 100 and preventing the support bearing 3 from moving in the axial direction.

To further reduce the weight of the planetary gearbox and reduce the material used, as shown in FIG. 2, a weight reduction groove 4 is arranged between the bearing table 22 and the gear web 21. Specifically, the weight reduction groove 4 is continuously arranged in a full circle around the gear web 21, thereby greatly reducing the weight of the planetary gearbox. In another embodiment, several weight reduction grooves 4 are arranged intermittently in the circumferential direction of the gear web 21, thereby ensuring the structural strength of the second planet carrier 2 while satisfying the weight reduction of the planetary gearbox.

Further, as shown in FIG. 2, the thickness of the bearing table 22 increases gradually in a direction toward the gear web 21 so that the connection between the bearing table 22 and the gear web 21 is firmer and more reliable, thereby ensuring the support stability of the support bearing 3.

Specifically, the mounting surface 221 of the bearing table 22 is parallel to the axial direction of the main shaft 100, and the surface of the bearing table 22 facing away from the mounting surface 221 gradually approaches the axis of the main shaft 100 in a direction toward the gear web 21.

Multiple bearing tables 22 may be spaced apart in the circumferential direction of the main shaft 100, or one bearing table 22 may be completely annularly arranged in the circumferential direction of the main shaft 100. In the embodiments here, the bearing table 22 is annularly arranged on the gear web 21 to form a continuous and complete annular structure, thereby further improving the connection reliability between the support bearing 3 and the second planet carrier 2. In another embodiment, several bearing tables 22 are spaced apart in the circumferential direction of the main shaft 100, thereby reducing the material used and the weight of the planetary gearbox while satisfying the connection stability with the support bearing 3.

In the embodiments here, the planetary gearbox has three stages of planet transmission mechanisms, and the three stages of planet transmission mechanisms are sequentially arranged in the gearbox body 200 in the circumferential direction of the main shaft 100. The main shaft 100 is fixedly connected to the first planet carrier 1 through bolts. The gearbox body 200 is provided with multiple ring gears that are fit with the respective stages of planet transmission mechanisms. The multiple planet carriers on the first planet carrier 1, the second planet carrier 2 and a third planet carrier are meshed with the respective inner ring gears of the gearbox body 200. The second planet carrier 2 is rotatably fit with the first planet carrier 1 through the support bearing 3, and the sun gear of the second planet carrier 2 is meshed with the planet gear of the first planet carrier 1. Similarly, the planet gear of the second planet carrier 2 is meshed with the sun gear of the third planet carrier, and the third planet carrier is rotatably fit with the gearbox body 200 through a bearing. When the main shaft 100 rotates, the main shaft 100 drives the first planet carrier 1 to rotate. Since the sun gear of the second planet carrier 2 is meshed with the planet gear of the first planet carrier 1, the rotation of the first planet carrier 1 drives the second planet carrier 2 to rotate, and by the same principle, since the sun gear of the third planet carrier is meshed with the planet gear of the second planet carrier 2, the rotation of the second planet carrier 2 further drives the third planet carrier to rotate, ultimately converting the rotation into output power. It is to be understood that since the first planet carrier 1, the second planet carrier 2 and the third planet carrier are all meshed with the ring gears of the gearbox body 200 through their respective planet gears, the first planet carrier 1, the second planet carrier 2 and the third planet carrier may rotate smoothly relative to the gearbox body 200.

## Claims

1. A planetary gearbox, comprising a first planet carrier (1), a second planet carrier (2) and a support bearing (3), wherein the first planet carrier (1), the support bearing (3) and the second planet carrier (2) are sequentially arranged in a gearbox body (200) in an axial direction of a main shaft (100), and the first planet carrier (1) is rotatably fit with the second planet carrier (2) through the support bearing (3).

2. The planetary gearbox according to claim 1, wherein the support bearing (3) is arranged between the first planet carrier (1) and the second planet carrier (2), an outer race of the support bearing (3) is in interference fit with the first planet carrier (1), and an inner race of the support bearing (3) is in interference fit with the second planet carrier (2).

3. The planetary gearbox according to claim 1, wherein the support bearing (3) comprises the inner race, the outer race, and a rolling element;
the inner race and the second planet carrier (2) are integrally formed, the outer race and the first planet carrier (1) are integrally formed, and the rolling element is filled between the inner race and the outer race such that the first planet carrier (1) is rotatably fit with the second planet carrier (2) through the support bearing (3).

4. The planetary gearbox according to claim 1, wherein the second planet carrier (2) comprises a gear web (21) for supporting a planet gear, and a bearing table (22) arranged on the gear web (21), and an inner race of the support bearing (3) is in interference connection with the bearing table (22).

5. The planetary gearbox according to claim 4, wherein an abutting groove is arranged on the first planet carrier (1) around an outer side of the bearing table (22), and an outer race of the support bearing (3) is engaged in the abutting groove.

6. The planetary gearbox according to claim 5, wherein the abutting groove is provided with a first abutting surface (11) and a second abutting surface (12), the first abutting surface (11) abuts against the outer race of the support bearing (3) in a radial direction of the main shaft (100), and the second abutting surface (12) abuts against the outer race of the support bearing (3) in the axial direction of the main shaft (100).

7. The planetary gearbox according to claim 6, wherein the bearing table (22) is provided with a mounting surface (221) and a docking surface (222), the mounting surface (221) abuts against the inner race of the support bearing (3) in the radial direction of the main shaft (100), and the docking surface (222) abuts against the inner race of the support bearing (3) in the axial direction of the main shaft (100).

8. The planetary gearbox according to claim 4, wherein a weight reduction groove (4) is arranged between the bearing table (22) and the gear web (21).

9. The planetary gearbox according to claim 8, wherein a thickness of the bearing table (22) increases gradually in a direction toward the gear web (21).

10. The planetary gearbox according to claim 4, wherein the bearing table (22) is annularly arranged on the gear web (21).

11. The planetary gearbox according to any one of claims 1 to 10, wherein the support bearing (3) is a conical bearing.

12. The planetary gearbox according to claim 1, wherein the first planet carrier (1) is spaced apart from the second planet carrier (2) in an axial direction of the main shaft (100) to enable lubricating oil partially to flow into the support bearing (3) in a radial direction of the main shaft (100) through a planet gear of the first planet carrier (1).
